# EUROPEAN PATENT APPLICATION

(11) **EP 4 231 070 A1**
(43) Date of publication of application: **23.08.2023**
(21) Application number: 23153828.1
(22) Date of filing: 27.01.2023
(51) Int. Cl.: G02B 6/30, G02B 6/12

(54) **FIBER-TO-CHIP COUPLING METHODS USING FLOWABLE INDEX MATCHING MATERIALS**

(30) Priority: 16.02.2022 US 202217673266
(71) Applicant: Honeywell International Inc., Charlotte, NC 28202 (US)
(72) Inventor: ROBBINS, Matthew, Charlotte, 28202 (US); PUCKETT, Matthew Wade, Charlotte, 28202 (US); HOYT, Chad, Charlotte, 28202 (US)
(74) Representative: Haseltine Lake Kempner LLP

(57) **Abstract**

A method for fiber-to-chip coupling is disclosed. The method comprises providing a photonic integrated circuit (PIC) that includes a substrate, a cladding layer on the substrate, and at least one waveguide embedded in the cladding layer, wherein the at least one waveguide has a waveguide interface. An optical fiber is positioned adjacent to the PIC, wherein the optical fiber has a fiber interface, and the fiber interface is aligned with the waveguide interface. A flowable inorganic oxide in liquid form is added to an area between the fiber interface and the waveguide interface. Thereafter, heat is applied to the area between the fiber interface and the waveguide interface for a period of time to cure the inorganic oxide, such that the optical fiber is coupled to the PIC. The cured inorganic oxide has a refractive index that substantially matches the refractive indices of the cladding layer and the optical fiber.

## Description

### BACKGROUND

In order to reduce size, weight, and power in telecommunication systems, optical sensing systems, position-navigation-timing (PNT) systems, and quantum computing systems, it is desirable to shift from benchtop optical systems and fiber optical systems to on-chip photonic integrated circuits. However, coupling light from a fiber to a chip-based waveguide introduces loss due to mode-mismatches and scattering at the fiber-air-chip interfaces.

Mode matching can be achieved by optimizing the design of the chip-based waveguide at the edge of the chip. Scattering at the fiber-chip interface can be reduced by using index matching fluids or curable resins. However, index matching fluids are typically a non-permanent solution, and curable resins can suffer from poor environmental stability as well as coefficient of thermal expansion (CTE) mismatches with the fiber and chip. Additionally, both index matching fluids and curable resins can degrade and cause absorption under high optical powers.

### SUMMARY

Methods for fiber-to-chip coupling are described herein. In one method, a photonic integrated circuit (PIC) is provided that includes a substrate, a cladding layer on the substrate, and at least one waveguide embedded in the cladding layer, wherein the at least one waveguide has a waveguide interface. An optical fiber is positioned adjacent to the PIC, wherein the optical fiber has a fiber interface, and the fiber interface is aligned with the waveguide interface. A flowable inorganic oxide in liquid form is added to an area between the fiber interface and the waveguide interface. Thereafter, heat is applied to the area between the fiber interface and the waveguide interface for a period of time to cure the inorganic oxide, such that the optical fiber is coupled to the PIC. The cured inorganic oxide has a refractive index that substantially matches the refractive indices of the cladding layer and the optical fiber.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a flow diagram of a method for fiber-to-chip coupling, according to one implementation;
Figures 2A to 4B schematically illustrate a fiber-to-chip coupling technique for an edge coupled photonic integrated circuit, according to one embodiment; and
Figures 5A to 7B schematically illustrate a fiber-to-chip coupling technique for an edge coupled photonic integrated circuit, according to another embodiment, in which input and output optical fibers are edge coupled to the photonic integrated circuit.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Methods for fiber-to-chip coupling using flowable index matching materials are described herein. The methods can use a flowable oxide liquid as an index matching material when cured, for coupling optical fibers to photonic integrated circuits or chips.

In one embodiment, the flowable oxide liquid can be an inorganic oxide liquid that produces a silicon dioxide (SiO₂) matching material when cured. Since claddings for both optical fibers and chips are commonly made of SiOz, an SiOz index matching material offers near-perfect index matching, environmental stability, high power handling, and low coefficient of thermal expansion (CTE) mismatch in the fiber-matching material-chip interface. This makes SiOz index matching materials a desirable choice for applications that need high stability and/or operation in harsh environments.

The present approach can enable permanent environmentally stable low loss coupling of light from fibers to optical chips, which is important for various systems, which have tight optical power budgets. The present methods provide a low cost way of minimizing power loss at a place where high loss is common, enabling system level power budgets to be met. Thus, the present methods can aid in producing various systems that require lower power, due to lower power loss from the fiber-to-chip coupling techniques described herein.

In one implementation method, a photonic integrated circuit or chip with an SiOz cladding is fabricated using standard microfabrication processes. The chip is diced and edge polished at the position of the coupling waveguides. A light guiding SiOz based fiber is aligned to the edge of the chip, and the light intensity or power at an output waveguide is maximized. Once optimal alignment is achieved, a drop of flowable oxide in liquid form is placed between the interfaces of the fiber and the chip. After the drop is placed, the fiber and chip are exposed to high heat until the flowable oxide is cured and becomes SiOz. Alternatively, the heat can only be applied locally to the flowable oxide and surrounding regions.

Alternatively, the drop of flowable oxide can be placed and the fiber can be further optimized while the flowable oxide is still in liquid form as the optimal point could shift. Once cured, the interfaces between the fiber and chip should be index matched and the cured SiOzwill be stable under harsh conditions.

Further details related to the present methods are described as follows and with reference to the drawings.

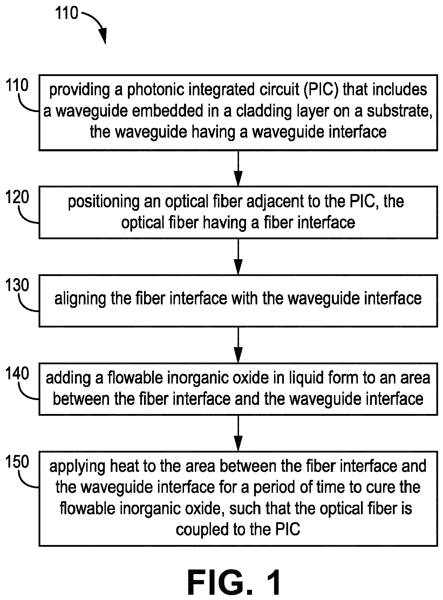

Figure 1 is a flow diagram of a method 100 for fiber-to-chip coupling according to one implementation. The method 100 includes providing a photonic integrated circuit (PIC) that includes at least one waveguide embedded in a cladding layer on a substrate, wherein the at least one waveguide has a waveguide interface (block 110). The method 100 further includes positioning an optical fiber adjacent to the PIC, wherein the optical fiber has a fiber interface (block 120), and aligning the fiber interface with the waveguide interface (block 130). Thereafter, a flowable inorganic oxide in liquid form is added to an area between the fiber interface and the waveguide interface (block 140). Heat is applied to the area between the fiber interface and the waveguide interface for a period of time to cure the flowable inorganic oxide, such that the optical fiber is coupled to the PIC (block 150). The cured inorganic oxide has a refractive index that substantially matches the refractive indices of the cladding layer and the optical fiber.

In one embodiment, the inorganic oxide liquid can be a compound that produces silicon dioxide when cured. For example, the inorganic oxide liquid can be a hydrogen silsesquioxane (HSQ), which is a class of inorganic compounds having the chemical formula [HSiO_{3/2}]ₙ. In one example, the hydrogen silsesquioxane comprises a cubic cluster compound having a chemical formula H₈Si₈O₁₂.

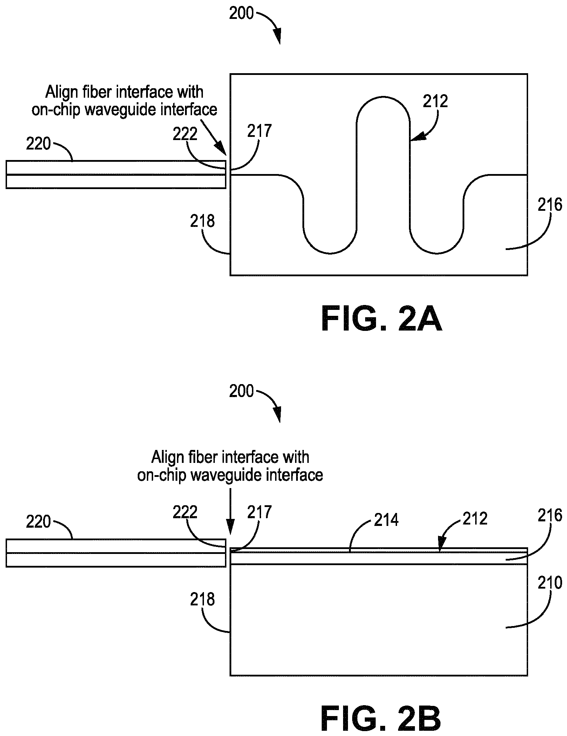

Figures 2A to 4B schematically illustrate a fiber-to-chip coupling technique for an edge coupled photonic integrated circuit (PIC) 200, according to one embodiment. The PIC 200 includes a substrate 210, and at least one on-chip waveguide 212. The substrate 210 can be composed of silicon, glass, quartz, sapphire, III-V materials, III-nitride materials, lithium niobate (LiNbO₃), combinations thereof, or the like. The on-chip waveguide 212 includes a core layer 214 of a higher refractive index material, which is embedded in a cladding layer 216 of a lower refractive index material. The cladding layer 216 is formed on one side of substrate 210 (see Fig. 2B). The core layer 214 can be composed of silicon nitride, silicon, aluminum oxide, LiNbO3, III-V materials, III-nitride materials, combinations thereof, or the like. The cladding layer 216 can be composed of silicon dioxide, aluminum oxide, combinations thereof, air, or the like. The waveguide 212 has an on-chip waveguide interface 217 at an edge 218 of PIC 200

The PIC 200 can be fabricated using standard microfabrication processes. In one embodiment, PIC 200 is formed with a silicon substrate, a lower cladding layer deposited on the silicon substrate, and an SiOz upper cladding layer deposited on an upper surface of the waveguide. A waveguide core is formed on the lower cladding layer, and embedded between the upper and lower cladding layers. The PIC 200 is then diced and edge polished at the position of an on-chip coupling waveguide.

As shown in the top view of Figure 2A and the side view of Figure 2B, an optical fiber 220 is located adjacent to input edge 218 of PIC 200. The optical fiber 220 can be a silicon dioxide based (glass) fiber, or the like. The optical fiber 220 has a fiber interface 222, which is aligned with on-chip waveguide interface 217. In one embodiment, a light guiding SiOz (glass) based fiber on a ferrule is aligned with edge 218 of PIC 200 at the waveguide interface, and the light intensity or power at an output waveguide is maximized.

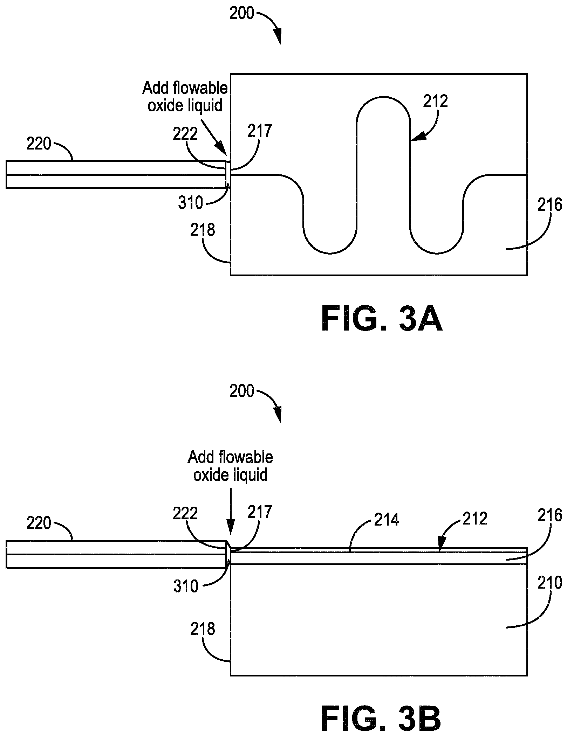

Once an optimal alignment is achieved, a flowable oxide liquid 310 is added to an area between waveguide interface 217 and fiber interface 222, as depicted in the top view of Figure 3A and the side view of Figure 3B. In one example, flowable oxide liquid 310 is an index matching inorganic oxide liquid that is added in droplet form. Surface tension will ensure that the droplet is in contact with both waveguide interface 217 and fiber interface 222, with no air in-between. In one embodiment, the inorganic oxide liquid can be a compound that produces silicon dioxide when cured. For example, the inorganic oxide liquid can be HSQ with a chemical formula [HSiO_{3/2}]ₙ.

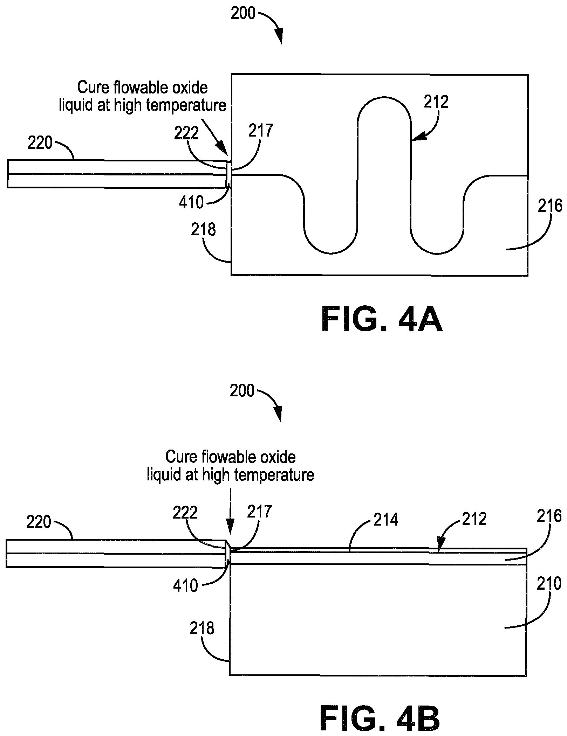

Next, as shown in the top view of Figure 4A and the side view of Figure 4B, the flowable oxide liquid is cured at a high temperature and becomes a solid oxide material 410, such that the optical fiber 220 is edge coupled to PIC 200. In one example, after a droplet of inorganic oxide liquid such as HSQ is added, the optical fiber and PIC are exposed to high heat such has by a furnace, until the HSQ is cured and becomes SiOz. Alternatively, the heat can be applied to the area between the fiber interface and waveguide interface such has by a heat gun or a laser, until the HSQ is cured and becomes SiO₂.

The heat for curing the flowable oxide liquid can be in a temperature range of about 250 °C to about 1000 °C (or higher), and can be applied for a period of time of about 1 hour to about 24 hours. The cured inorganic oxide has a refractive index that substantially matches the refractive indices of the cladding layer on the PIC and the optical fiber.

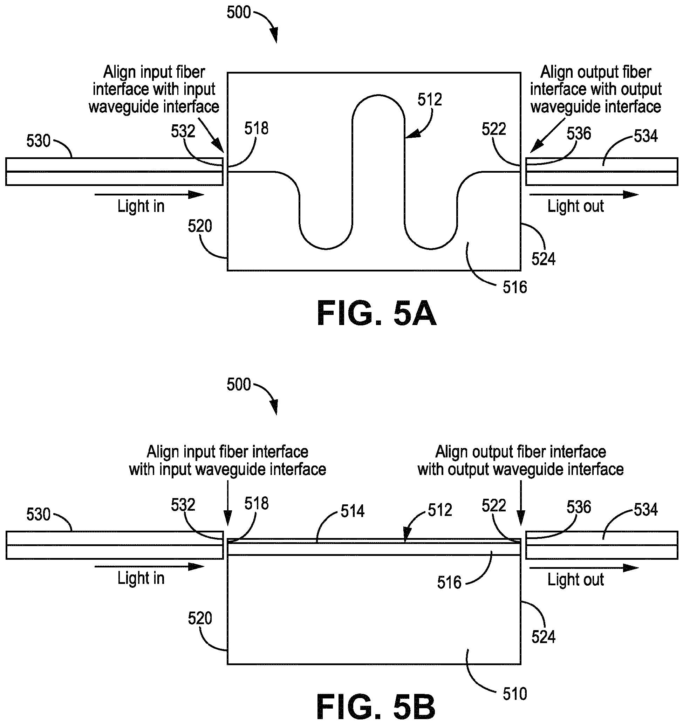

Figures 5A to 7B schematically illustrate a fiber-to-chip coupling technique for an edge coupled photonic integrated circuit (PIC) 500, according to another embodiment, in which input and output optical fibers are edge coupled to PIC 500.

The PIC 500 includes a substrate 510, and at least one on-chip waveguide 512. The substrate 510 can be composed of silicon, for example. The on-chip waveguide 512 includes a core layer 514 of a higher refractive index material, which is embedded in a cladding layer 516 of a lower refractive index material. The cladding layer 516 is formed on one side of substrate 510 (see Fig. 5B). In one embodiment, core layer 514 can be composed of silicon nitride, cladding layer 516 can be composed of silicon dioxide. An input waveguide interface 518 is located at an input edge 520 of PIC 500, and an output waveguide interface 522 located at an output edge 524 of PIC 500.

The PIC 500 can be fabricated using standard microfabrication processes. In one embodiment, PIC 500 is formed with a silicon substrate and an SiOz cladding layer on an upper surface of the silicon substrate. A waveguide core is formed on the silicon substrate and embedded in the cladding layer. The PIC 500 is then diced and edge polished at input and output edges 520, 524.

As shown in the top view of Figure 5A and the side view of Figure 5B, an input optical fiber 530 is located adjacent to input edge 520 of PIC 500, and is configured to direct light into PIC 500. The input optical fiber 530 can be a silicon dioxide based fiber, for example. The input optical fiber 530 has an input fiber interface 532, which is aligned with input waveguide interface 518. In addition, an output optical fiber 534 is located adjacent to output edge 524 of PIC 500, and is configured to direct light that is output from PIC 500. The output optical fiber 534 can also be a silicon dioxide based fiber, for example. The output optical fiber 534 has an output fiber interface 536, which is aligned with output waveguide interface 522.

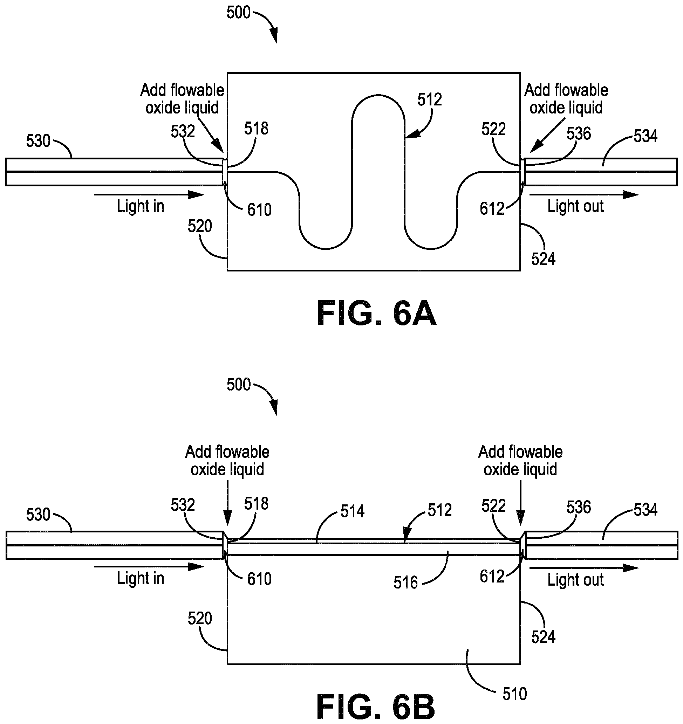

Once an optimal alignment is achieved, a flowable oxide liquid 610 is added to an area between input waveguide interface 518 and input fiber interface 532, as depicted in the top view of Figure 6A and the side view of Figure 6B. In addition, a flowable oxide liquid 612 is added to an area between output waveguide interface 522 and output fiber interface 536. In one example, flowable oxide liquids 610, 612 are index matching inorganic oxide liquids that are added in droplet form. In one embodiment, the inorganic oxide liquids can be a compound that produces silicon dioxide when cured. For example, the inorganic oxide liquids can be HSQ with a chemical formula [HSiO_{3/2}]ₙ.

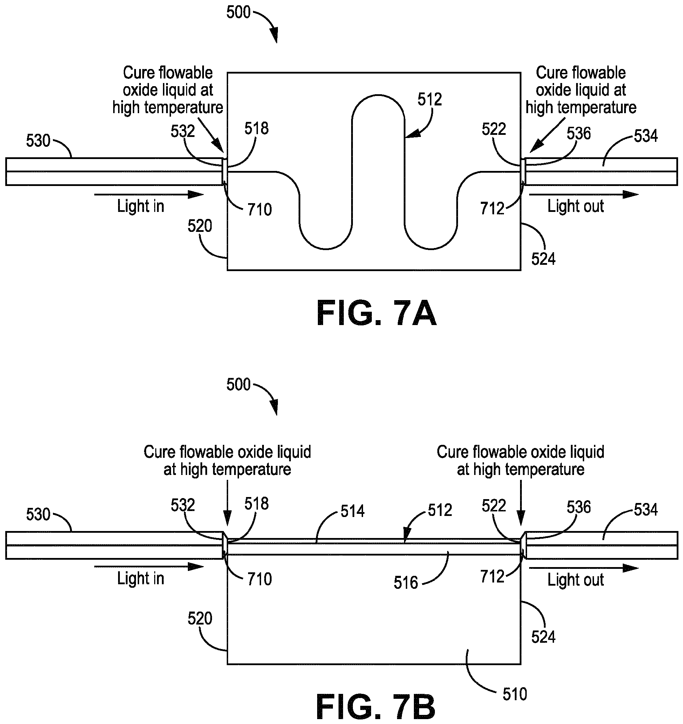

Next, flowable oxide liquids 610, 612 are cured at a high temperature and become solid oxide materials 710, 712, as shown in the top view of Figure 7A and the side view of Figure 7B. This results in input optical fiber 530 and output optical fiber 534 being edge coupled to PIC 500. In one example, after droplets of inorganic oxide liquid such as HSQ are added, the optical fibers and PIC are exposed to high heat such has by a furnace, until the HSQ is cured and becomes SiOz. Alternatively, the heat can be applied to the areas between the fiber interfaces and the waveguide interfaces such has by a heat gun or a laser, until the HSQ is cured and becomes SiO₂.

The heat for curing the flowable oxide liquid can be in a temperature range of about 250 °C to about 1000 °C (or higher), and can be applied for a period of time of about 1 hour to about 24 hours. The cured inorganic oxides have a refractive index that substantially matches the refractive indices of the cladding layer on the PIC and the optical fibers.

### Example Embodiments

Example 1 includes a method comprising: providing a photonic integrated circuit (PIC) that includes a substrate, a cladding layer on the substrate, and at least one waveguide embedded in the cladding layer, wherein the at least one waveguide has a waveguide interface; positioning an optical fiber adjacent to the PIC, wherein the optical fiber has a fiber interface; aligning the fiber interface with the waveguide interface; adding a flowable inorganic oxide in liquid form to an area between the fiber interface and the waveguide interface; and applying heat to the area between the fiber interface and the waveguide interface for a period of time to cure the inorganic oxide, such that the optical fiber is coupled to the PIC, wherein the cured inorganic oxide has a refractive index that substantially matches the refractive indices of the cladding layer and the optical fiber.

Example 2 includes the method of Example 1, wherein the substrate comprises silicon, glass, quartz, sapphire, III-V materials, III-nitride materials, lithium niobate, or combinations thereof.

Example 3 includes the method of any of Examples 1-2, wherein the at least one waveguide includes a core comprising a higher refractive index material, and the cladding layer comprises a lower refractive index material.

Example 4 includes the method of Example 3, wherein: the core comprises silicon nitride, silicon, aluminum oxide, lithium niobate, III-V materials, III-nitride materials, or combinations thereof; and the cladding layer comprises silicon dioxide, aluminum oxide, or combinations thereof.

Example 5 includes the method of any of Examples 1-4, wherein the optical fiber comprises a glass based fiber.

Example 6 includes the method of any of Examples 1-5, wherein the inorganic oxide comprises a compound that produces silicon dioxide when cured.

Example 7 includes the method of any of Examples 1-6, wherein the inorganic oxide comprises a hydrogen silsesquioxane (HSQ) with a chemical formula [HSiO_{3/2}]ₙ.

Example 8 includes the method of Example 7, wherein the hydrogen silsesquioxane comprises a cubic cluster compound having a chemical formula H₈Si₈O₁₂.

Example 9 includes the method of any of Examples 1-8, wherein the inorganic oxide is added in droplet form.

Example 10 includes the method of any of Examples 1-8, wherein the heat applied to the area between the fiber interface and the waveguide interface has a temperature of about 250 °C to about 1000 °C, which is applied for a period of time of about 1 hour to about 24 hours.

Example 11 includes the method of any of Examples 1-10, wherein the heat is applied by a furnace, a heat gun, or a laser.

Example 12 includes the method of any of Examples 1-11, wherein the fiber interface is aligned with the waveguide interface such that a light intensity or power at an output waveguide on the PIC is maximized when a light beam is transmitted from the optical fiber into the PIC.

Example 13 includes the method of any of Examples 1-12, wherein: the waveguide interface is located at an input edge of the PIC; the optical fiber is an input fiber positioned adjacent to the input edge of the PIC; and the fiber interface is aligned with the waveguide interface at the input edge of the PIC such that the input fiber is edge coupled to the PIC when the inorganic oxide is cured.

Example 14 includes the method of any of Examples 1-12, wherein: the waveguide interface is located at an output edge of the PIC; the optical fiber is an output fiber positioned adjacent to the output edge of the PIC; and the fiber interface is aligned with the waveguide interface at the output edge of the PIC such that the output fiber is edge coupled to the PIC when the inorganic oxide is cured.

Example 15 includes a method for fiber-to-chip coupling, the method comprising: providing a photonic integrated circuit (PIC) that includes a substrate, a cladding layer on the substrate, and at least one waveguide embedded in the cladding layer, the PIC having an input edge and an output edge, the at least one waveguide having an input waveguide interface at the input edge and an output waveguide interface at the output edge; positioning an optical input fiber adjacent to the input edge of the PIC, wherein the optical input fiber has an input fiber interface; aligning the input fiber interface with the input waveguide interface; positioning an optical output fiber adjacent to the output edge of the PIC, wherein the optical output fiber has an output fiber interface; aligning the output fiber interface with the output waveguide interface; adding a flowable inorganic oxide in liquid form to a first area between the input fiber interface and the input waveguide interface; adding the flowable inorganic oxide in liquid form to a second area between the output fiber interface and the output waveguide interface; applying heat to the first and second areas for a period of time to cure the inorganic oxide, such that the optical input fiber and the optical output fiber are edge coupled to the PIC, wherein the cured inorganic oxide has a refractive index that substantially matches the refractive indices of the cladding layer, the optical input fiber, and the optical output fiber.

Example 16 includes the method of Example 15, wherein: the core comprises silicon nitride, silicon, aluminum oxide, lithium niobate, III-V materials, III-nitride materials, or combinations thereof; the cladding layer comprises silicon dioxide, aluminum oxide, or combinations thereof; and the input and output fibers comprises silicon dioxide based fibers.

Example 17 includes the method of any of Examples 15-16, wherein the inorganic oxide comprises a compound that produces silicon dioxide when cured.

Example 18 includes the method of any of Examples 15-17, wherein the inorganic oxide comprises a hydrogen silsesquioxane (HSQ) with a chemical formula [HSiO_{3/2}]ₙ.

Example 19 includes the method of any of Examples 15-18, wherein the inorganic oxide is added in droplet form.

Example 20 includes the method of any of Examples 15-19, wherein the heat is applied by a furnace, a heat gun, or a laser.

From the foregoing, it will be appreciated that, although specific embodiments have been described herein for purposes of illustration, various modifications may be made without deviating from the scope of the disclosure. Thus, the described embodiments are to be considered in all respects only as illustrative and not restrictive. In addition, all changes that come within the meaning and range of equivalency of the claims are to be embraced within their scope.

## Claims

1. A method comprising:
providing a photonic integrated circuit (PIC) that includes a substrate, a cladding layer on the substrate, and at least one waveguide embedded in the cladding layer, wherein the at least one waveguide has a waveguide interface;
positioning an optical fiber adjacent to the PIC, wherein the optical fiber has a fiber interface;
aligning the fiber interface with the waveguide interface;
adding a flowable inorganic oxide in liquid form to an area between the fiber interface and the waveguide interface; and
applying heat to the area between the fiber interface and the waveguide interface for a period of time to cure the inorganic oxide, such that the optical fiber is coupled to the PIC, wherein the cured inorganic oxide has a refractive index that substantially matches the refractive indices of the cladding layer and the optical fiber.

2. The method of claim 1, wherein:
the substrate comprises silicon, glass, quartz, sapphire, III-V materials, III-nitride materials, lithium niobate, or combinations thereof;
the core comprises silicon nitride, silicon, aluminum oxide, lithium niobate, III-V materials, III-nitride materials, or combinations thereof; and
the cladding layer comprises silicon dioxide, aluminum oxide, or combinations thereof.

3. The method of claim 1, wherein:
the optical fiber comprises a glass based fiber; and
the inorganic oxide comprises a compound that produces silicon dioxide when cured.

4. The method of claim 1, wherein the inorganic oxide comprises a hydrogen silsesquioxane (HSQ) with a chemical formula [HSiO_{3/2}]ₙ.

5. The method of claim 4, wherein the hydrogen silsesquioxane comprises a cubic cluster compound having a chemical formula H₈Si₈O₁₂.

6. The method of claim 1, wherein the inorganic oxide is added in droplet form.

7. The method of claim 1, wherein the heat applied to the area between the fiber interface and the waveguide interface has a temperature of about 250 °C to about 1000 °C, which is applied for a period of time of about 1 hour to about 24 hours.

8. The method of claim 1, wherein the heat is applied by a furnace, a heat gun, or a laser.

9. The method of claim 1, wherein:
the waveguide interface is located at an input edge of the PIC;
the optical fiber is an input fiber positioned adjacent to the input edge of the PIC; and
the fiber interface is aligned with the waveguide interface at the input edge of the PIC such that the input fiber is edge coupled to the PIC when the inorganic oxide is cured.

10. The method of claim 1, wherein:
the waveguide interface is located at an output edge of the PIC;
the optical fiber is an output fiber positioned adjacent to the output edge of the PIC; and
the fiber interface is aligned with the waveguide interface at the output edge of the PIC such that the output fiber is edge coupled to the PIC when the inorganic oxide is cured.
